# EUROPÄISCHE PATENTSCHRIFT

(11) **EP 0 688 994 B1**
(45) Veröffentlichungstag und Bekanntmachung des Hinweises auf die Patenterteilung: **25.03.1998**
(21) Anmeldenummer: 95109186.7
(22) Anmeldetag: 14.06.1995
(51) Int. Cl.: F16L 47/00, F16L 37/084

(54) **Gehäusestutzen an einem aus Kunststoff bestehenden Gehäuse eines Ventils**
Union for a plastic valve housing
Raccord de connexion pour un corps de soupape en plastique

(30) Priorität: 21.06.1994 DE 4421574
(43) Veröffentlichungstag der Anmeldung: 27.12.1995
(73) Patentinhaber: GRAU GMBH, D-69123 Heidelberg (DE)
(72) Erfinder: Sulzyc, Georg, D-69214 Eppelheim (DE); Venghaus, Horst, D-69190 Walldorf (DE)
(74) Vertreter: Patentanwälte Rehberg + Hüppe

(56) Entgegenhaltungen:
- EP-A- 0 223 942
- CH-A- 506 015
- DE-A- 4 305 609
- US-A- 4 451 069
- US-A- 4 905 766
- US-A- 5 219 188

## Beschreibung

Die Erfindung bezieht sich auf einen Gehäusestutzen für den Schraubanschluß einer Leitung, an einem aus Kunststoff bestehenden Gehäuse eines Ventils, mit einem metallenen Gewindeeinsatz, der in einem Kunststoffstutzen des Gehäuses angeordnet ist, wobei zwischen dem Gewindeeinsatz und dem Kunststoffstutzen zumindest ein eine Hinterschneidung bildender umlaufender Vorsprung und eine entsprechende umlaufende Vertiefung vorgesehen sind. Insbesondere an Ventilen, aber auch an anderen Aggregaten an Kraftfahrzeugen ist es erforderlich, einen Schraubanschluß zwischen einer Leitung und einem Gehäusestutzen herzustellen. Zwecks vereinfachter Herstellung der Gehäuse wird Kunststoff eingesetzt, der beispielsweise in einer Spritzform in die entsprechende Formgestaltung für das Gehäuse gebracht wird. Für einen Schraubanschluß einer Leitung ist die Ausbildung eines Gewindes erforderlich, wobei die direkte Unterbringung des Gewindes in dem Kunststoffstutzen des Gehäuses oft nicht die erforderlichen Eigenschaften, insbesondere die Ausreißfestigkeit, erbringt. Es ist deshalb bekannt, Gewindeeinsätze aus Metall in Verbindung mit Kunststoffstutzen an aus Kunststoff bestehenden Gehäusen zu verwenden, um das Gewinde letztendlich in dem metallenen Gewindeeinsatz unterbringen zu können.

Ein Gehäusestutzen der eingangs beschriebenen Art ist aus der DE 34 43 079 A1 bekannt. Das Gehäuse besteht aus Kunststoff und besitzt einen Kunststoffstutzen oder ein entsprechendes Wandungsteil aus dem Kunststoff des Gehäuses, wobei in dem Kunststoffstutzen ein Gewindeeinsatz aus Metall untergebracht ist. Der Gewindeeinsatz ist fest im Kunststoffstutzen angeordnet. Der betreffende metallene Gewindeeinsatz wird in die Spritzform des Gehäuses eingelegt und durch Umspritzen mit dem Kunststoff mit diesem fest verankert. Der metallene Gewindeeinsatz endet nach außen in der Stirnwand des Kunststoffstutzens, so daß keine Angriffsmöglichkeit für ein Werkzeug am Gewindeeinsatz besteht. Eine solche Angriffsmöglichkeit ist auch nicht beabsichtigt, weil der Gewindeeinsatz ohnehin fest im Kunststoffstutzen angeordnet ist. Bei der Leitungsverbindung mit einem Schraubstutzen mit Gegengewinde wird der Schraubstutzen in den Gewindeeinsatz und das dort vorgesehene Gewinde eingeschraubt. Dabei muß in der Regel eine Dichtung angezogen werden, die bei dem bekannten Gehäusestutzen im Bereich der Stirnseite angeordnet ist und dabei den Dichtspalt zwischen Gewindeeinsatz und Kunststoffstutzen abdichtet. Für das Anziehen dieser Axialdichtung muß ein Mindestdrehmoment über den Schraubstutzen auf den Gewindeeinsatz übertragen werden. Durch die Einformung des Gewindeeinsatzes beim Spritzen des Kunststoffgehäuses ist eine Belastungsgrenze für die Anordnung des Gewindeeinsatzes in dem Kunststoffstutzen festgelegt, die während der Montage nicht überschritten werden sollte. Häufig wird diese Belastungsgrenze des Kunststoffes jedoch überschritten, wenn die Montage nicht feinfühlig genug erfolgt. Andererseits ist es möglich, daß die Dichtung bei Einhalten dieser Belastungsgrenze ihre Dichtfunktion noch nicht erfüllt, so daß ein Nachziehen mit erhöhtem Drehmoment erforderlich wird, um die Dichtheit der Dichtung herbeizuführen. Dabei besteht die Gefahr, daß sich der Gewindeeinsatz im Kunststoffstutzen löst. Dann aber ist die Verbindung defekt und unbrauchbar. Weder kann die Dichtung fester angezogen, noch der Schraubstutzen gelöst werden. Bei einem nicht feinfühligen Anziehen besteht auch die Gefahr, den Kunststoffstutzen zu beschädigen. Dieser erhält dann radial verlaufende Risse, wodurch die Verbindung ebenfalls unbrauchbar wird.

Die Erfindung beschäftigt sich mit einem Gehäusestutzen für den Schraubanschluß einer Leitung, wobei bei diesem Schraubanschluß der Leitung ein Drehmoment notwendigerweise aufgebracht werden muß. Es geht also nicht um eine Steckverbindung, bei deren Zusammenfügen ohnehin kein Drehmoment zur Einwirkung gebracht wird.

Der Erfindung liegt die Aufgabe zugrunde, einen Gehäusestutzen aus einem Kunststoffstutzen und einem metallenen Gewindeeinsatz zu schaffen, bei dem bei einem Schraubanschluß einer Leitung der Kunststoffstutzen nicht mehr von einer Kraft beansprucht wird, die über das bei einem Schraubanschluß notwendigerweise aufzubringende einwirkende Drehmoment verursacht wird.

Erfindungsgemäß wird dies bei dem Gehäusestutzen der eingangs beschriebenen Art dadurch erreicht, daß der Gewindeeinsatz durch die den Vorsprung und die Vertiefung aufweisende Verbindung nur axial in dem Kunststoffstutzen gesichert frei drehbar gelagert ist, und daß der Gewindeeinsatz aus dem Kunststoffstutzen herausragend vorgesehen ist und dort eine Ansatzfläche für ein Verdrehwerkzeug aufweist.

Die Erfindung geht von dem Gedanken aus, in bewußter Abkehr vom bisherigen Stand der Technik den Gewindeeinsatz im Kunststoffstutzen nicht fest, sondern frei drehbar zu lagern, so daß es nicht möglich ist, über den Gewindeeinsatz den Kunststoffstutzen über ein Drehmoment zu belasten. Der Gewindeeinsatz wird nur in axialer Richtung gesichert in dem Kunststoffstutzen untergebracht. Da bei dem Schraubanschluß einer Leitung beispielsweise ein Schraubstutzen verdreht und dabei ein Drehmoment auf diesen aufgebracht wird, erhält der Gewindeeinsatz einen aus dem Kunststoffstutzen herausragenden Teil und dort eine Ansatzfläche, um den Gewindeeinsatz während der Montage des Schraubstutzens und des Schraubanschlusses der Leitung beispielsweise festzuhalten und so daß Gegenmoment zu dem aufgebrachten Drehmoment aufzubringen. Mit diesem Gegenmoment wird jedoch nur der Gewindeeinsatz belastet, nicht dagegen der Kunststoffstutzen. Hierauf ist es zurückzuführen, daß der Kunststoffstutzen frei von derartigen einwirkenden Kräften bleibt. Im Vergleich zum bisherigen Stand der Technik, bei dem der Gewindestutzen immer fest im Kunststoffstutzen gelagert war, erscheint es merkwürdig und überraschend, daß der Gewindestutzen nun frei drehbar angeordnet ist.

Grundsätzlich ist es gleichgültig, an welchem der Teile der umlaufende Vorsprung und die umlaufende Vertiefung angeordnet sind. Der Vorsprung ist immer an dem einen Teil und die Vertiefung an dem anderen Teil angeordnet. Es können auch mehrere aufeinander abgestimmte Vorsprünge und Vertiefungen in der Verbindung vorgesehen sein.

Besonders vorteilhaft ist es, wenn der umlaufende Vorsprung und die umlaufende Vertiefung an der Verbindung zwischen Kunststoffstutzen und Gewindeeinsatz in radialer Richtung eine derart geringe Höhe bzw. Tiefe aufweisen, daß der Gewindeeinsatz durch einen Einpreßvorgang in axialer Richtung unter elastischer Aufweitung des Kunststoffstutzens in diesen einbringbar ist. Damit wird zunächst das aus Kunststoff bestehende Gehäuse mit dem Kunststoffstutzen hergestellt. In erkaltetem Zustand kann der Gewindeeinsatz eingepreßt werden. Die geringe Höhe bzw. Tiefe wirkt sich vorteilhaft bei der Formgebung des Gehäuses bzw. des Kunststoffstutzens aus. Es ist nicht erforderlich, geteilte Kerne zu verwenden, sondern die Entformung des Kunststoffstutzens kann auch im elastischen Bereich stattfinden. Auch während der Montage des Gewindestutzens in den Kunststoffstutzen wird das Kunststoffmaterial im Bereich der elastischen Aufweitung bzw. Zusammendrückung beansprucht. An dem umlaufenden Vorsprung ist zweckmäßig eine Schrägfläche zum erleichterten Einfügen des Gewindeeinsatzes vorgesehen. Es ist aber auch möglich, die Gewindeeinsätze bei der Formgebung des Gehäuses mit dem Kunststoffstutzen in die Spritzform einzulegen und mit Kunststoff zu umspritzen. Dabei muß jedoch dafür Sorge getragen werden, daß keine feste Verbindung zwischen dem Gewindeeinsatz und dem Kunststoffstutzen erfolgt, sondern die freie Drehbarkeit gewährleistet ist. Dies kann beispielsweise durch Aufbringung eines temporär wirkenden Trennmittels auf den Gewindeeinsatz erreicht werden.

Zwischen dem Gewindeeinsatz und dem Kunststoffstutzen kann eine Dichtung vorgesehen sein. Besonders vorteilhaft ist eine radial angepreßte Dichtung, die die freie Drehbarkeit des Gewindeeinsatzes möglichst wenig behindert. Aber auch eine axial zusammendrückbare Dichtung läßt sich einsetzen.

Besonders vorteilhaft ist es, wenn der Gewindeeinsatz gestuft ausgebildet ist und die Dichtung auf einem kleineren Durchmesser als der umlaufende Vorsprung und die Vertiefung angeordnet sind. Damit wird die Wirkfläche des Gewindeeinsatzes, die bei druckführenden Leitungen entsprechend druckbelastet ist, vorteilhaft klein gestaltet, so daß die Verbindung durch die Vertiefung und den Vorsprung in axialer Richtung auch nur relativ gering belastet ist.

Als Dichtung kommen normale O-Ringe in Frage, die in entsprechenden Nuten eingelegt werden. Es ist aber auch möglich, die Dichtung an dem Kunststoffstutzen bei dessen Herstellung anzuspritzen. Die Dichtung ist dann zweckmäßig in Form einer Dichtlippe ausgebildet, deren Elastizität ausreicht, um die erforderliche Dichtheit bereitzustellen.

Der Gewindeeinsatz kann an seinem aus dem Kunststoffstutzen herausragenden Bereich einen Flansch aufweisen, der die Ansatzfläche trägt und dessen Außendurchmesser etwa dem Außendurchmesser des Kunststoffstutzens entspricht. Damit wird zugleich eine Anzeigemöglichkeit geschaffen, die eine Überprüfung des ordnungsgemäßen Sitzes des eingepreßten Gewindeeinsatzes in dem Kunststoffstutzen ermöglicht.

Der Gewindeeinsatz kann aber auch einen umlaufenden, den Kunststoffstutzen übergreifenden Fortsatz aufweisen, der auf seinem Innendurchmesser den umlaufenden Vorsprung oder die umlaufende Vertiefung aufweist, während die korrespondierende Vertiefung oder der Vorsprung auf den Außendurchmesser des Kunststoffstutzens vorgesehen sind. Die Verbindung der beiden Teile geschieht dabei gleichsam auf der Außenseite des Kunststoffstutzens. Mit dieser Konstruktion kann Wärmeausdehnungsproblemen begegnet werden.

Es besteht auch die Möglichkeit, den Kunststoffstutzen zu schlitzen und ein Sicherungselement zum Zusammenhalten des geschlitzten Kunststoffstutzens vorzusehen. Von dieser Möglichkeit wird man dann Gebrauch machen, wenn ein Gehäusestutzen für einen relativ kleinen Durchmesser zu verwirklichen ist und/oder die Elastizität des Kunststoffmaterials des Gehäuses und des Kunststoffstutzens relativ gering ist. Durch die Schlitzung wird die Montage und das Einführen des Gewindeeinsatzes begünstigt. Das Sicherungselement hält dann die Teile zusammen.

Im Kunststoffstutzen kann ein von der Dichtung in die Atmosphäre führender Leckagekanal vorgesehen sein. Zum erleichterten Einbringen des Gewindeeinsatzes in den Kunststoffstutzen können die Teile gefettet werden, wobei hierdurch, insbesondere bei geringem Spiel, eine pneumatische Dichtheit erzielt werden kann, die die Dichtfunktion einer angeordneten Dichtung überdeckt. Der Leckagekanal zeigt dann bei einer Überprüfung der Verbindung sehr schnell an, ob die eigentliche Dichtung ihre Dichtfunktion erfüllt oder nicht.

Die Erfindung wird anhand verschiedener Ausführungsbeispiele weiter erläutert und beschrieben. Es zeigen:
- Figur 1: eine Schnittdarstellung des Gehäusestutzens in einer ersten Ausführungsform,
- Figur 2: eine Ansicht und einen Halbschnitt des Gehäusestutzens mit den übrigen Teilen, die zum Anschluß einer Leitung dienen,
- Figur 3: eine weitere Ausführungsform des Gehäusestutzens,
- Figur 4: eine weitere Ausführungsform des Gehäusestutzens und
- Figur 5: eine letzte Ausführungsform des Gehäusestutzens.

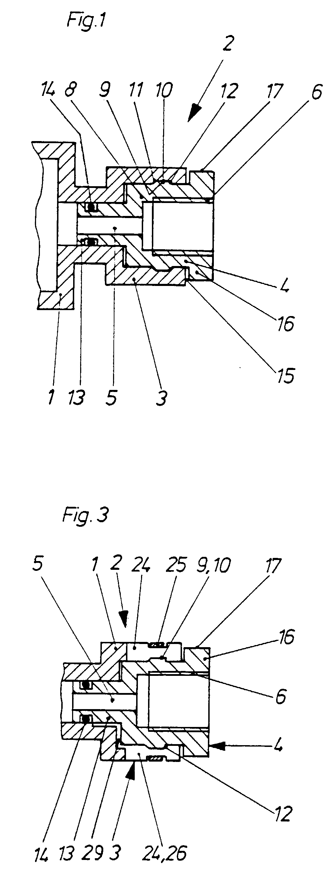

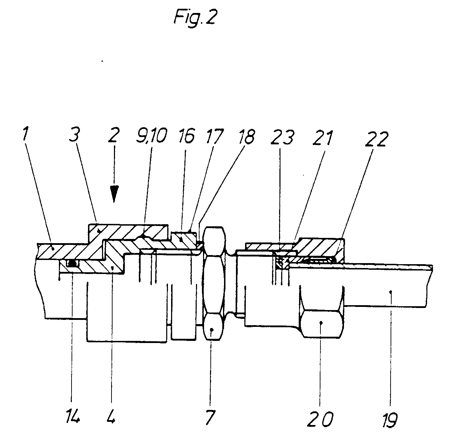

In Figur 1 ist ein Teil eines Gehäuses 1 eines Ventils, beispielsweise eines Niveauregelventils, dargestellt. Das Gehäuse 1 besteht aus Kunststoff und weist mindestens einen Gehäusestutzen 2 auf. Der Gehäusestutzen 2 ist zweiteilig ausgebildet. Er besitzt einen Kunststoffstutzen 3 und einen Gewindeeinsatz 4. Der Kunststoffstutzen 3 besteht aus Kunststoff und ist inbesondere einstückig mit dem Gehäuse 1 ausgebildet. Der Gewindeeinsatz 4 hingegen besteht aus Metall und besitzt die Form einer hohl ausgebildeten Buchse, durch die sich ein Kanal 5 erstreckt, durch den bei Betätigung in betriebsbereitem Zustand insbesondere Druckluft fließt. Der Gewindeeinsatz 4 trägt ein Gewinde 6 zum Anschluß eines Schraubstutzens 7 (Figur 2).

Der Gewindeeinsatz 4 trägt in seinem Mittelbereich 8 einen umlaufenden Vorsprung 9, der als Wulst, Rippe o. dgl. ausgebildet ist. Zu dem Vorsprung 9 gehört eine umlaufende Vertiefung 10, die im Bereich des Innendurchmessers des Kunststoffstutzens 3 vorgesehen ist. Der Vorsprung 9 und die Vertiefung 10 sind in ihrer axialen Lage aneinander angepaßt, so daß die ordnungsgemäße Relativlage des Gewindeeinsatzes 4 in den Kunststoffstutzen 3 dann erreicht wird, wenn der Gewindeeinsatz 4 unter einer Einschnappbewegung nach elastischer Aufformung des Kunststoffstutzens 3 in diesen eingeschoben oder eingepreßt worden ist. Wesentlich ist, daß durch die aus dem Vorsprung 9 und der Vertiefung 10 bestehende Verbindung zwischen den Teilen der Gewindeeinsatz 4 nur in axialer Richtung in dem Kunststoffstutzen 3 festgelegt ist. Der Gewindeeinsatz 4 ist in dem Kunststoffstutzen 3 frei drehbar angeordnet. Die Höhe bzw. Tiefe des Vorsprungs 9 und der Vertiefung 10 in radialer Richtung ist nur gering, und zwar so, daß der Gewindeeinsatz 4 nachträglich in den Kunststoffstutzen 3 des hergestellten Gehäuses 1 einpreßbar ist. Zum erleichterten Einpressen ist an dem Vorsprung 9 eine Schrägfläche 11 vorgesehen. Der axiale Halt des Gewindeeinsatzes 4 in dem Kunststoffstutzen 3 erfolgt über eine Hinterschneidungsfläche 12, die schräg bis radial verlaufend angeordnet sein kann. Eine schräge Anordnung begünstigt die Entformung des Gehäuses 1 mit dem Kunststoffstutzen 3, ohne daß ein geteilter Kern Anwendung finden müßte.

Der Gewindeeinsatz 4 weist dem Innern des Gehäuses 1 zugekehrt einen gestuften Ansatz 13 mit gegenüber dem Mittelbereich 8 reduzierten Durchmesser auf. In diesem Bereich ist eine Dichtung 14 untergebracht, die aus einem O-Ring bestehen kann, der in eine umlaufende Nut auf dem Ansatz 13 eingelegt ist. Über die Dichtung 14 wird die Druckdichtheit erzielt. Die Dichtung 14 wird radial zusammengepreßt und erfüllt dabei ihre Dichtwirkung. Es wäre aber auch möglich, eine Dichtung an der Übergangsstelle zwischen dem Mittelbereich 8 und dem Ansatz 13 vorzusehen und diese Dichtung in axialer Richtung anzupressen und dadurch die Dichtfunktion zu erzielen.

Der Gewindeeinsatz 4 ragt nach außen über eine Stirnfläche 15 des Kunststoffstutzens 3 über. Dort ist ein Flansch 16 an dem Gewindeeinsatz 4 ausgebildet, der auf seinem äußeren Umfang eine Ansatzfläche 17 für ein Verdreh- bzw. Haltewerkzeug aufweist. Die Ansatzfläche 17 kann insbesondere in Form eines Sechskants ausgebildet sein. Über die Ansatzfläche 17 kann der Gewindeeinsatz 4 in dem Kunststoffstutzen 3 frei gedreht oder durch Festhalten an einer Drehung gehindert werden.

In Figur 2 ist die gesamte Verbindung dargestellt. In dem Kunststoffstutzen 3 des Gehäuses 1 ist der Gewindeeinsatz 4 eingepreßt und damit frei drehbar gelagert. Der Gewindeeinsatz 4 wird mit Hilfe der Ansatzfläche 17 festgehalten und damit an einer Drehung gehindert. Unter Zwischenlage einer Dichtscheibe 18 aus Aluminium wird zunächst der Schraubstutzen 7 durch Ansatz eines Verdrehwerkzeuges in den festgehaltenen Gewindeeinsatz 4 eingeschraubt, bis die Dichtheit im Bereich der Dichtscheibe 18 erzielt ist. Die Verbindung dient eigentlich dem Anschluß einer Leitung 19, die als Rohr ausgebildet sein möge. In an sich bekannter Weise findet eine Überwurfmutter 20, ein Druckring 21 und ein Schneidring 22 Verwendung, wobei eine weitere Dichtscheibe 23 beigefügt wird. Dieser Bereich entspricht jedoch dem üblichen Stand der Technik und bedarf daher keiner weiteren Beschreibung. Wichtig ist es nur zu erkennen, daß beim Anziehen des Schraubstutzens 7 und beim Festhalten des Gewindeeinsatzes 4 an der Ansatzfläche 17 auf den Kunststoffstutzen 3 keine Kraft ausgeübt wird, die ihre Ursache in der Aufbringung eines Drehmomentes hätte. Insoweit wird der Kunststoffstutzen 3 frei von einer Beanspruchung gehalten, so daß keine Gefahr besteht, daß während der Montage auch bei Aufbringung eines relativ hohen Drehmomentes eine Beschädigung des Kunststoffstutzens 3 und/oder des Gewindeeinsatzes 4 stattfindet.

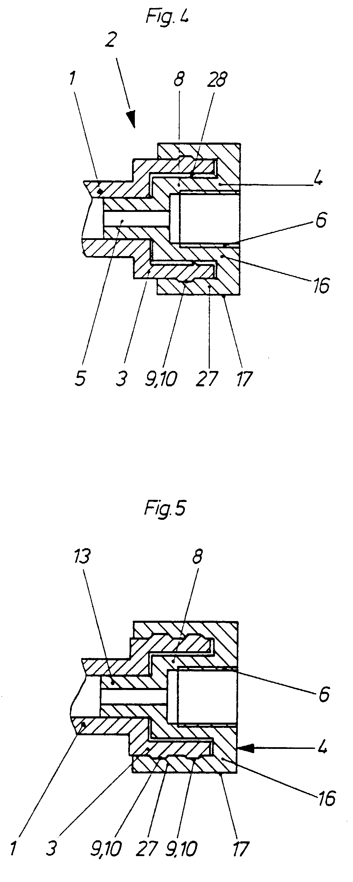

Bei der Ausführungsform gemäß Figur 3 ist abweichend zur Ausführungsform gemäß Figur 1 die Hinterschneidungsfläche 12 radial angeordnet. Der Kunststoffstutzen 3 ist mit mehreren in axialer Richtung verlaufenden Schlitzen 24 versehen, so daß der Kunststoffstutzen 3 hierdurch eine erhöhte Elastizität erhält. Damit läßt sich der Gewindeeinsatz 4 leichter und einfacher in den Kunststoffstutzen 3 einschieben, wobei sich die geschlitzten Teile des Kunststoffstutzens 3 elastisch aufweiten. Die hierdurch konstruktiv begünstigte elastische Aufweitung wird insbesondere bei kleinen Durchmessern genutzt. Um aber nach dem Einpressen des Gewindeeinsatzes 4 in den Kunststoffstutzen 3 den Gewindeeinsatz axial verläßlich festzulegen, ist ein Sicherungselement 25, beispielsweise in Form einer Schelle, eines Klemmbandes o. dgl. vorgesehen, der die geschlitzten Teile des Kunststoffstutzen 3 zusammenhält. Es versteht sich, daß dieses Sicherungselement 25 erst dann angebracht wird, wenn vorher der Gewindeeinsatz 4 in den Kunststoffstutzen 3 eingeschoben worden ist. Die Schlitze 24 können gleichzeitig einen Leckagekanal 26 bzw. mehrere solcher Leckagekanäle 26 bilden, die von der Außenseite der Dichtung 14 über eine sich axial und radial erstreckende Nut 29 in die Atmosphäre führen. Damit wird bewußt ein Weg geschaffen, um bei einer undichten Dichtung 14 ein Abblasen bei Druckbeaufschlagung zu erzielen, um den Fehler feststellen und beseitigen zu können.

Die in Figur 4 dargestellte Ausführungsform des Gehäusestutzens 2 weist die Besonderheit auf, daß der Flansch 16 des Gewindeeinsatzes 4 mit einem den Kunststoffstutzen 3 außen übergreifenden Fortsatz 27 versehen ist, in dessen Bereich der umlaufende Vorsprung 9 und die Vertiefung 10 vorgesehen sind. Der Vorsprung 9 befindet sich hier auf dem Außendurchmesser des Kunststoffstutzens 3, während die Vertiefung 10 auf dem Innendurchmesser des Fortsatzes 27 des Gewindeeinsatzes 4 vorgesehen ist. Das Kunststoffmaterial des Kunststoffstutzens 3 wird damit von dem Metall des Gewindeeinsatzes 4 umgeben, so daß bei einer Temperaturbeaufschlagung der Teile keine Gefahr besteht, daß die Verbindung im Bereich zwischen Vorsprung 9 und Vertiefung 10 nachgeben könnte. Der Kunststoffstutzen 3 besitzt die weitere Besonderheit, daß bei seiner Herstellung eine angeformte Dichtlippe 28 mit angebracht wurde, die die Funktion der Dichtung 14 übernimmt. Beim Einschieben des Gewindeeinsatzes 4 in den Kunststoffstutzen 3 legt sich die Dichtlippe 28 dichtend an den Mittelbereich 8 des Gewindeeinsatzes 4 an.

Bei der Ausführungsform gemäß Figur 5 ist der Fortsatz 27 axial in Richtung auf das Gehäuse 1 noch mehr verlängert. In diesem Bereich sind zwei Verbindungsstellen aus Vorsprüngen 9 und Vertiefungen 10 axial hintereinandergeschaltet. Hierdurch wird gleichzeitig eine Art Labyrinthdichtung gebildet, so daß auf die gesonderte Anordnung einer Dichtung 14 bzw. Dichtlippe 28 verzichtet werden kann. Nachteilig ist hieran abgesehen von der Art der Dichtung auch der Umstand, daß bei einer Druckbeaufschlagung die Dichtung einen relativ großen Wirkdurchmesser aufweist, so daß der Gewindeeinsatz 4 entsprechend kraftmäßig belastet ist.

### BEZUGSZEICHENLISTE

- 1 -: Gehäuse
- 2 -: Gehäusestutzen
- 3 -: Kunststoffstutzen
- 4 -: Gewindeeinsatz
- 5 -: Kanal
- 6 -: Gewinde
- 7 -: Schraubstutzen
- 8 -: Mittelbereich
- 9 -: Vorsprung
- 10 -: Vertiefung
- 11 -: Schrägfläche
- 12 -: Hinterschneidungsfläche
- 13 -: Ansatz
- 14 -: Dichtung
- 15 -: Stirnfläche
- 16 -: Flansch
- 17 -: Ansatzfläche
- 18 -: Dichtscheibe
- 19 -: Leitung
- 20 -: Überwurfmutter
- 21 -: Druckring
- 22 -: Schneidring
- 23 -: Dichtscheibe
- 24 -: Schlitz
- 25 -: Sicherungselement
- 26 -: Leckagekanal
- 27 -: Fortsatz
- 28 -: Dichtlippe
- 29 -: Nut

## Patentansprüche

1. Gehäusestutzen (2) für den Schraubanschluß einer Leitung (19), an einem aus Kuststoff bestehenden Gehäuse (1) eines Ventils, mit einem metallenen Gewindeeinsatz (4), der in einem Kunststoffstutzen (3) des Gehäuses (1) angeordnet ist, wobei zwischen dem Gewindeeinsatz (4) und dem Kunststoffstutzen (3) zumindest ein eine Hinterschneidung bildender umlaufender Vorsprung (9) und eine entsprechende umlaufende Vertiefung (10) vorgesehen sind, dadurch gekennzeichnet, daß der Gewindeeinsatz (4) durch die den Vorsprung (9) und die Vertiefung (10) aufweisende Verbindung nur axial gesichert im dem Kunststoffstutzen (3) frei drehbar gelagert ist, und daß der Gewindeeinsatz (4) aus dem Kunststoffstutzen (3) herausragend vorgesehen ist und dort eine Ansatzfläche (17) für ein Verdrehwerkzeug aufweist.

2. Gehäusestutzen nach Anspruch 1, dadurch gekennzeichnet, daß der umlaufende Vorsprung (9) und die umlaufende Vertiefung (10) an der Verbindung zwischen Kunststoffstutzen (3) und Gewindeeinsatz (4) in radialer Richtung eine derart geringe Höhe bzw. Tiefe aufweisen, daß der Gewindeeinsatz (4) durch einen Einpreßvorgang in axialer Richtung unter elastischer Aufweitung des Kunststoffstutzens (3) in diesen einbringbar ist.

3. Gehäusestutzen nach Anspruch 2, dadurch gekennzeichnet, daß an dem umlaufenden Vorsprung (9) eine Schrägfläche (11) zum erleichterten Einfügen des Gewindeeinsatzes (4) vorgesehen ist.

4. Gehäusestutzen nach einem der Ansprüche 1 bis 3, dadurch gekennzeichnet, daß zwischen dem Gewindeeinsatz (4) und dem Kunststoffstutzen (3) eine Dichtung (14, 28) vorgesehen ist.

5. Gehäusestutzen nach Anspruch 4, dadurch gekennzeichnet, daß der Gewindeeinsatz (4) gestuft ausgebildet ist und daß die Dichtung (14) auf einem kleineren Durchmesser als der umlaufende Vorsprung (9) und die Vertiefung (10) angeordnet ist.

6. Gehäusestutzen nach Anspruch 4 oder 5, dadurch gekennzeichnet, daß die Dichtung (28) an dem Kunststoffstutzen (3) bei dessen Herstellung angespritzt ist.

7. Gehäusestutzen nach Anspruch 1, dadurch gekennzeichnet, daß der Gewindeeinsatz (4) an seinem aus dem Kunststoffstutzen (3) herausragenden Bereich einen Flansch (16) aufweist, der die Ansatzfläche (17) trägt und dessen Außendurchmesser etwa dem Außendurchmesser des Kunststoffstutzens (3) entspricht.

8. Gehäusestutzen nach Anspruch 1 oder 7, dadurch gekennzeichnet, daß der Gewindeeinsatz (4) einen umlaufenden, den Kunststoffstutzen (3) übergreifenden Fortsatz (27) aufweist, der auf seinem Innendurchmesser den umlaufenden Vorsprung (9) oder die umlaufende Vertiefung (10) aufweist, während die korrespondierende Vertiefung (10) oder der Vorsprung (9) auf dem Außendurchmesser des Kunststoffstutzens (3) vorgesehen sind.

9. Gehäusestutzen nach einem der Ansprüche 1 bis 8, dadurch gekennzeichnet, daß der Kunststoffstutzen (3) geschlitzt ausgebildet ist und daß ein Sicherungselement (25) zum Zusammenhalten des geschlitzten Kunststoffstutzens (3) vorgesehen ist.

10. Gehäusestutzen nach einem der Ansprüche 4 bis 9, dadurch gekennzeichnet, daß im Kunststoffstutzen (3) ein von der Dichtung (14) in die Atmosphäre führender Leckagekanal (26) vorgesehen ist.

## Claims

1. A connection piece (2) for the connection of a pipe (19) to a plastic housing (1) of a valve, comprising a threaded plug (4) made of metal, which is arranged in a plastic sleeve (3) of the housing (1), whereby at least one circumferential projection (9) and one corresponding circumferential groove (10) are provided between the threaded plug (4) and the plastic sleeve (3) characterized in that the threaded plug (4) is secured only in an axial manner and freely rotatable borne in the plastic sleeve (3) by the connection of the circumferential projection (9) and the corresponding circumferential groove (10), and the threaded plug (4) is provided protruding the plastic sleeve (3) to the outside and comprises a gripping surface (17) for the supply of a tool.

2. The connection piece of claim 1 characterized in that the circumferential projection (9) and the circumferential groove (10) at the point of the connection between the plastic sleeve (3) and the threaded plug (4) have a small height and depth in a manner so that the threaded plug (4) may be axially introduced into the plastic sleeve (3) under widening in its elastic area.

3. The connection piece of claim 2 characterized in that the circumferential projection (9) is provided with an inclined surface (11) in order to facilitate the introduction of the threaded plug (4).

4. The connection piece of one of the claims 1 to 3 characterized in that a seal (14) is provided between the threaded plug (4) and the plastic sleeve (3).

5. The connection piece of claim 4 characterized in that the threaded plug (4) is designed in a stepwise manner and the seal (14) is located on a smaller diameter than the circumferential projection (9) and the circumferential groove (10).

6. The connection piece of claim 4 or 5 characterized in that a lip seal (28) is formed on the plastic sleeve (3) during its production.

7. The connection piece of claim 1 characterized in that the threaded plug (4) comprises a flange (16) in its region protruding the plastic sleeve (3) and the flange (16) carries the gripping surface (17) and has an outside diameter, which corresponds to the outside diameter of the plastic sleeve (3).

8. The connection piece of claim 1 or 7 characterized in that the threaded plug (4) comprises a circumferential extension (27) surrounding the plastic sleeve (3), the circumferential extension (27) having the circumferential projection (9) or the circumferential groove (10) on its inside diameter, while the corresponding circumferential groove (10) or the circumferential projection (9) is located on the outside diameter of the plastic sleeve (3).

9. The connection piece of one of the claims 1 to 8 characterized in that the plastic sleeve (3) is designed in a slitted manner and a security element (25) is provided for holding together the slitted plastic sleeve (3).

10. The connection piece of one of the claims 4 to 9 characterized in that the plastic sleeve (3) is provided with a leakage channel (26) leading from the seal (14) to the atmosphere.

## Revendications

1. Tubulure de boîtier (2) pour le raccord à vis d'une conduite (19) à un corps (1), en matière plastique, d'une soupape, comportant un insert taraudé (4) métallique, qui est monté dans une tubulure plastique (3) du corps (1), entre l'insert taraudé (4) et la tubulure plastique (3) étant prévus au moins une saillie (9) périphérique, formant un détalonnage, et un creux (10) périphérique correspondant, caractérisée en ce que l'insert taraudé (4) est monté, de manière à pouvoir tourner librement, dans la tubulure plastique (3), uniquement bloqué axialement par la liaison présentant la saillie (9) et le creux (10), et en ce que l'insert taraudé (4) est prévu de manière à dépasser de la tubulure plastique (3) et présente à cet endroit une surface d'application (17) d'un outil de serrage.

2. Tubulure de boîtier selon la revendication 1, caractérisée en ce que la saillie (9) périphérique et le creux (10) périphérique présentent, au droit de la liaison entre la tubulure plastique (3) et l'insert taraudé (4), une hauteur ou profondeur, dans la direction radiale, si faible que l'insert taraudé (4) peut être introduit, par une opération de pressage dans la direction axiale, dans la tubulure plastique (3), par élargissement élastique de celle-ci.

3. Tubulure de boîtier selon la revendication 2, caractérisée en ce que sur la saillie (9) périphérique est prévue une surface oblique (11) pour faciliter l'insertion de l'insert taraudé (4).

4. Tubulure de boîtier selon l'une des revendications 1 à 3, caractérisée en ce qu'une étanchéité (14, 28) est prévue entre l'insert taraudé (4) et la tubulure plastique (3).

5. Tubulure de boîtier selon la revendication 4, caractérisée en ce que l'insert taraudé (4) est étagé et en ce que l'étanchéité (14) est disposée sur un plus petit diamètre que la saillie périphérique (9) et le creux (10).

6. Tubulure de boîtier selon la revendication 4 ou 5, caractérisée en ce que l'étanchéité (28) est moulée par injection sur la tubulure plastique (3), lors de sa fabrication.

7. Tubulure de boîtier selon la revendication 1, caractérisée en ce que l'insert fileté (4) présente, sur sa zone dépassant de la tubulure plastique (3), une bride (16), qui porte la surface d'application (17) et dont le diamètre extérieur correspond à peu près au diamètre extérieur de la tubulure plastique (3).

8. Tubulure de boîtier selon la revendication 1 ou 7, caractérisée en ce que l'insert taraudé (4) présente un prolongement (27) périphérique, passant sur la tubulure plastique (3), qui présente, sur son diamètre intérieur, la saillie (9) périphérique ou le creux (10) périphérique, tandis que le creux (10) correspondant ou la saillie (9) sont prévus sur le diamètre extérieur de la tubulure plastique (3).

9. Tubulure de boîtier selon l'une des revendications 1 à 8, caractérisée en ce que la tubulure plastique (3) est fendue et en ce qu'un élément de blocage (25) est prévu pour maintenir ensemble la tubulure plastique (3) fendue.

10. Tubulure de boîtier selon l'une des revendications 4 à 9, caractérisée en ce que dans la tubulure plastique (3) est prévu un canal de fuite (26) menant de l'étanchéité (14) à l'atmosphère.
